Europäisches Patentamt

European Patent Office

Office européen des brevets

(11) Veröffentlichungsnummer: **0 368 022**

**A2**

## (12) EUROPÄISCHE PATENTANMELDUNG

(21) Anmeldenummer: **89118938.3**

(22) Anmeldetag: **12.10.89**

(51) Int. Cl.⁵: **A01C 15/04**

(30) Priorität: **10.11.88 DE 3838134**

(43) Veröffentlichungstag der Anmeldung:
**16.05.90 Patentblatt 90/20**

(84) Benannte Vertragsstaaten:
**DE FR GB SE**

(71) Anmelder: **Amazonen-Werke H. Dreyer GmbH & Co. KG**
**Am Amazonenwerk 9-13**
**D-4507 Hasbergen-Gaste(DE)**

(72) Erfinder: **Scheufler, Bernd, Dr.**
**Am Amazonenwerk 101**
**D-4507 Hasbergen(DE)**

(54) **Gebläse mit zumindest zwei Druckluftanschlussstutzen.**

(57) Gebläse mit zumindest zwei Druckluftanschluß-stutzen. Um, auf einfachste Weise mit einem Gebläse Haupt- und Nebenförderströme zu erzeugen, ist vorgesehen, daß die Druckluftanschlußstutzen (21,22) unterschiedliche Austrittsquerschnitte aufwei-sen

FIG. 2

## Gebläse mit zumindest zwei Druckluftanschluß stutzen

Die Erfindung betrifft ein Gebläse mit zumindest zwei Druckluftanschlußstutzen.

Ein derartiges Gebläse ist beispielsweise durch die deutsche Offenlegungsschrift 35 13 739 bekannt. Bei diesem Gebläse gemäß Fig. 7 sind die beiden Austrittsquerschnitte der beiden Druckluftanschlußstutzen gleich groß. An jedem Druckluftanschlußstutzen ist ein trichterförmiges Verbindungsstück zu den Rohrleitungen eines Auslegerstreuers, eines sog. Pneumatikdüngerstreuers, angeschlossen.

Des weiteren ist durch diese Druckschrift eine weitere Maschine, ein Pneumatikdüngerstreuer, mit mehreren Gebläsen zur Erzeugung von Hauptförderströmen und Nebenförderströmen bekannt. Bei dieser Ausführungsform beispielsweise gemäß Fig. 2 der DE-OS 35 13 739, ist für den Nebenförderstrom ein eigenes Gebläse vorgesehen, welches einen Förderluftstrom erzeugt, über den das Material zu dem Hauptförderstrom geblasen wird. Dieser Hauptförderstrom wird jeweils von weiteren eigenen Gebläsen erzeugt, der den Dünger über Rohrleitungen den in Abständen zueinander angeordneten Ausblasstellen jeweils zuführt.

Der Erfindung liegt die Aufgabe zugrunde, auf einfachste Weise mit einem Gebläse Haupt- und Nebenförderströme zu eizeugen.

Diese Aufgabe wird erfindungsgemäß dadurch gelöst, daß die Druckluftanschlußstutzen unterschiedliche Austrittsquerschnitte aufweisen. Durch diese Maßnahme ist es in einfachster Weise möglich, mit nur einem Gebläse auszukommen, um Haupt- und Nebenförderströme mit unterschiedlich großen Luftfördermengen zu versorgen, und zwar mit nur einem einzigen Gebläse. Hierdurch wird ein äußerst einfaches Gebläse für die verschiedensten Anwendungsfälle, beispielsweise für einen Pneumatikdüngerstreuer, geschaffen.

Hierbei ist erfindungsgemäß vorgesehen, daß an den Druckluftanschlußstutzen verschiedene Leitungen angeschlossen sind, wobei die an den Druckluft anschlußstutzen mit dem kleineren Austrittsquerschnitt eine Vorförderleitung und an dem Druckluftanschlußstutzen mit dem größeren Austrittsquerschnitt die Hauptförderleitung angeschlossen ist. Infolge dieser Maßnahme ergibt sich ein sehr einfaches und kostengünstiges Gebläse.

Des weiteren sieht die Erfindung vor, daß das erfindungsgemäße Gebläse zum Einsatz in einem Pneumatikdüngerstreuer vorgesehen ist, der Dosierelemente aufweist, von denen aus über einen ersten Düngerstrom das von den Dosierorganen dosierte Material über Übergabestellen in einen Hauptförderstrom, eingegeben wird. Hierbei ist dann erfindungsgemäß vorgesehen, daß die Vorförderleitung, die das Material von den Dosierorganen zu den Hauptförderleitungen fördert, an den kleineren Druckluftanschlußstutzen des Gebläses angeschlossen ist, während die Hauptförderleitungen, die dem Gebläse zugeordnet sind, an dem größeren Druckluftanschlußstutzen angeschlossen sind.

Weitere Einzelheiten der Erfindung sind der Beispielsbeschreibung und den Zeichnungen zu entnehmen. Hierbei zeigt

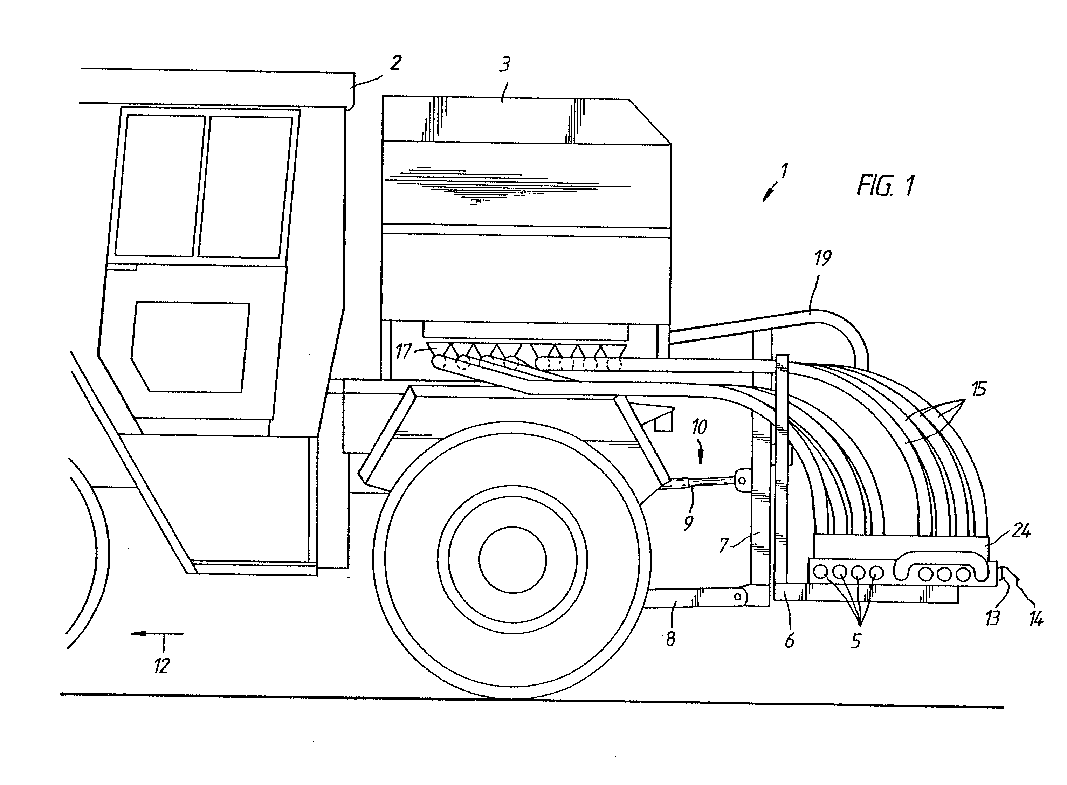

Fig. 1 einen mit einem in erfindungsgemäßer Weise ausgerüsteten Gebläse ausgestatteter Pneumatikdüngerstreuer für große Arbeitsbreiten in Prinzipdarstellung und in der Seitenansicht,

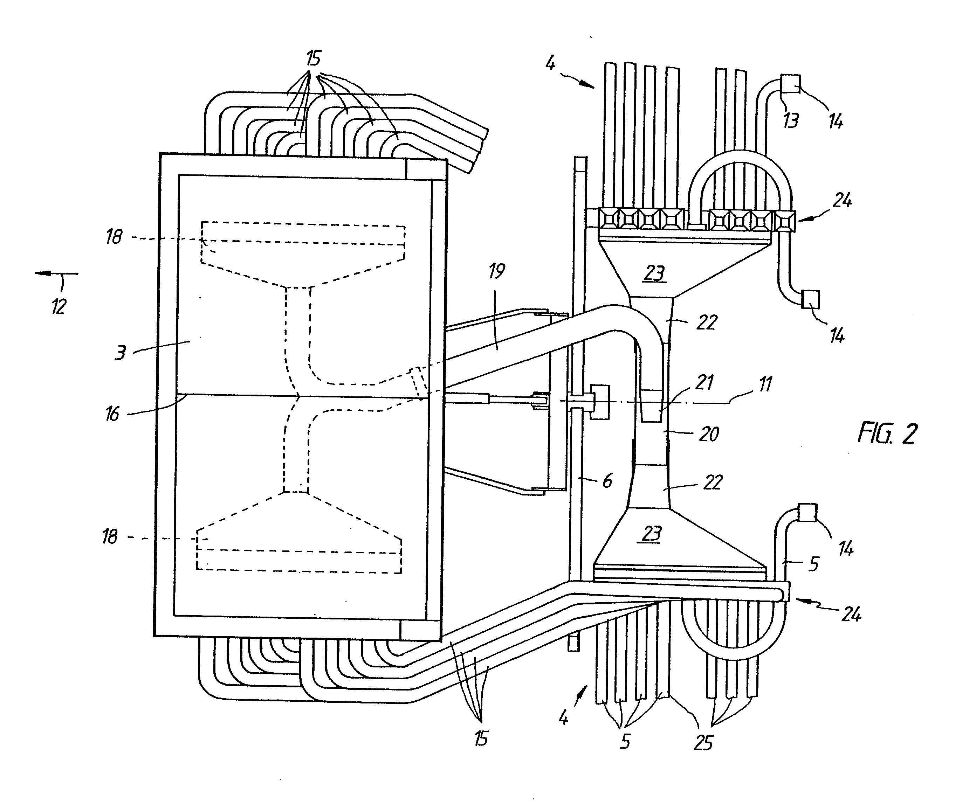

Fig. 2 schematische Darstellung des Pneumatikdüngerstreuers gemäß Fig. 1 ohne den Ackerschlepper in der Draufsicht und

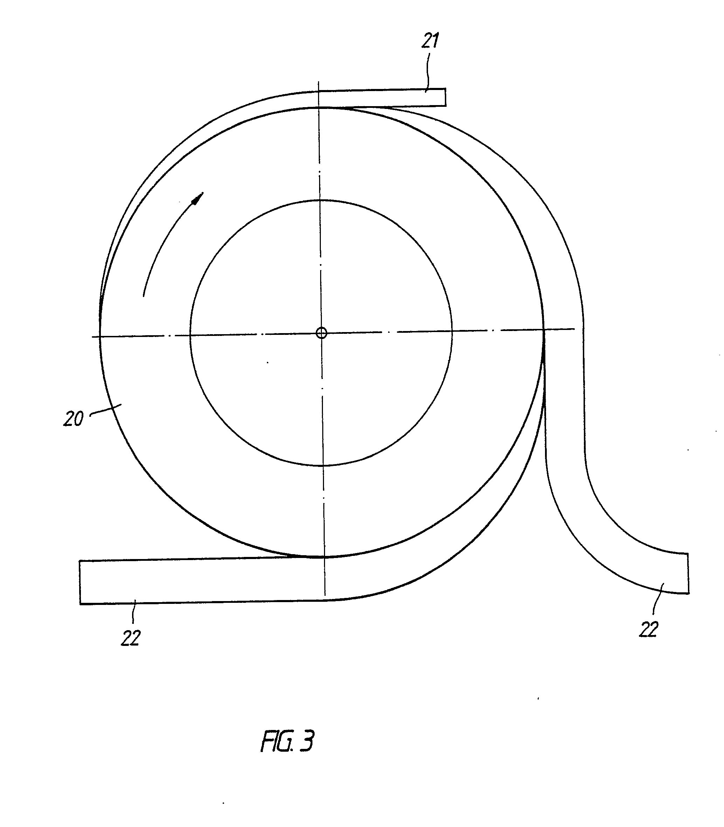

Fig. 3 das erfindungsgemäße Gebläse mit zwei unterschiedlich großen Austrittsquerschnitten der Druckluftanschlußstützen.

Der für große Arbeitsbreiten ausgebildete Pneumatikdüngerstreuer 1 weist den auf dem Systemschlepper 2 aufgesattelten Vorratsbehälter 3 auf, der das auszustreuende Material aufnimmt. Die einzelnen, zu den jeweiligen Verteilergestängen 4 zusammengefaßten einzelnen Ausbringleitungen 5 sind an dem Rahmen 6 angeordnet, welcher über die Dreipunktanbaueinheit 7 in dem aus den zwei Unterlenkern 8 und dem Oberlenker 9 bestehenden Dreipunktgestänge 10 des Systemschleppers 2 befestigt sind.

Die sich jeweils rechts und links der Fahrzeuglängsachse 11 quer zur Fahrtrichtung 12 erstreckenden Verteilergestänge 4 bestehen aus den nebeneinander angeordneten Ausbringleitungen 5, die jeweils in unterschiedlichen Abständen die Ausströmöffnungen 13 aufweisen, vor denen jeweils die Prallplatten 14 angeordnet sind. Mittels dieser Prallplatten 14 wird das den jeweiligen Ausströmöffnungen 13 aus dem Düngervorratsbehälter 3 zugeführte Düngemateral breitflächig und in gleichmaßiger Weise auf der Bodenoberfläche verteilt.

Den jeweiligen Ausbringleitungen 5 werden die sich im Vorratsbehälter 3 befindlichen Düngemittelpartikel jeweils über die einzelnen Vorförderleitungen 15 zugeführt. Diesen Vorförderleitungen 15 werden die Düngemittel aus dem einen dachförmigen Mittelteil 16 aufweisenden Vorrratsbehälter 3 in bekannter Weise über die sich parallel zur Fahrtrichtung 12 erstreckenden und nicht näher dargestellten Dosierorgane, welche sich oberhalb der Einlauftrichter 17 befinden, in genau einstellbaren Mengen zudosiert. Jede Vorförderleitung 15 weisten einen derartigen Einlauftrichter 17 auf, der Bestandteil einer sog. Einfüllschleuse ist. Diese Einfüllschleusen sind jeweils mit einem trichterförmig ausgebildeten Luftverteiler 18 verbunden. Diese Luftverteiler 18 befinden sich für die jeweils rechts und links der Fahrzeuglängsachse 11 sich befindlichen Verteilergestänge 4 ebenfalls jeweils rechts und links der Fahrzeuglängsachse 11 im unteren Bereich des Vorratsbehälters 3. Die beiden Luftverteiler 18 sind über die Luftzuführleitung 19 mit dem Gebläse 20 verbunden. Diese Luftzuführleitung 19 ist mit dem Druckluftanschlußstutzen 21 des Gebläses 20 verbunden und weist den kleinsten Austrittsquerschnitt der an dem Gebläse 20 sich befindlichen Druckluftanschlußstutzen 21 und 22 auf. Die Druckluftanschlußstutzen 22 sind jeweils mit den Luftverteilern 23 verbunden, welche die vom Gebläse 20 erzeugte Druckluft zu den einzelnen Ausbringleitungen 5 der Verteilergestänge 4 leitet. Die Druckluftanschlußstutzen 22 weisen einen größeren Austrittsquerschnitt auf, als der Druckluftstutzen 21. Die unterschiedlich großen Austrittsquerschnitte der Druckluftanschlußstutzen 21 und 22 sind erforderlich, da für die Vorförderleitungen 15 ein wesentlich geringeres Luftvolumen zum Transport der diesen Vorförderleitungen 15 zudosierten Düngemittelpartikel zu den Übergangsstellen 24 der Hauptförderleitungen 25 notwendig, ist als die Luftmenge, die zum Transport der Düngemittelpartikel innerhalb der Hauptförderleitungen 25 zu den jeweiligen Ausströmöffnungen 13 der Ausbringleitungen 5 benötigt wird. Die Ausbringleitungen 5 bilden die Hauptförderleitungen 25.

Der von dem Gebläse 20 erzeugte Luftstrom wird somit entsprechend der Größe des jeweiligen Austrittsquerschnittes der Druckluftanschlußstutzen 21 und 22 auf die Vorförderleitungen 15 und auf die Hauptförderleitungen 25 in entsprechender Weise aufgeteilt, so daß mit nur einem Gebläse 20 die Düngemittelzufuhr zu den Ausströmöffnungen 13 der Ausbringleitungen 5 in exakter Weise gewährleistet ist, wenn die Ausbringleitungen 5 nicht unmittelbar unter dem Vorratsbehälter 3 des Pneumatikdüngerstreuers 1 angeordnet sind und es notwendig ist, den Hauptförderleitungen 25 die Düngemittelpartikel über Vorförderleitungen 15 zuzuführen.

## Ansprüche

1. Gebläse mit zumindest zwei Druckluftanschlußstutzen, dadurch gekennzeichnet, daß die Druckluftanschlußstutzen (21,22) unterschiedliche Austrittsquerschnitte aufweisen.

2. Gebläse nach Anspruch 1, dadurch gekennzeichnet, daß an den Druckluftanschlußstutzen (21,22) verschiedene Leitungen (15,25) angeschlossen sind, wobei an den Druckluftanschlußstutzen (21) mit dem kleineren Austrittsquerschnitt die Vorförderleitungen (15) und an dem Druckluftanschlußstutzen (22) mit dem größeren Austrittsquerschnitt die Hauptförderleitungen (25) angeschlossen sind.

3. Gebläse mit zumindest zwei Druckanschlußstutzen, zum Einsatz in einem Pneumatikdüngerstreuer, der Dosierelemente aufweist, von denen aus über einen ersten Düngerstrom das von den Dosierorganen dosierte Material über Übergabestellen in einem Hauptförderstrom, den sog. Ausbringleitungen des Verteilergestänges eingegeben wird, dadurch gekennzeichnet, daß die Vorförderleitungen (15), die das Material von den Dosierorganen zu den Hauptförderleitungen (25) führen, an den kleineren Druckluftanschlußstutzen (21) des Gebläses (20) angeschlossen sind, während die Hauptförderleitungen (25), die dem Gestänge (4) zugeordnet sind, an dem größeren Druckluftanschlußstutzen (22) angeschlossen sind.

FIG. 1

EP 0 368 022 A2

FIG. 2

FIG. 3